# EUROPEAN PATENT SPECIFICATION

(11) **EP 3 333 993 B1**
(45) Date of publication and mention of the grant of the patent: **24.03.2021**
(21) Application number: 17204778.9
(22) Date of filing: 30.11.2017
(51) Int. Cl.: H02G 1/00, B23D 29/00, B25F 5/00

(54) **SYSTEM FOR CUTTING ELECTRIC WIRES**
SYSTEM ZUM SCHNEIDEN VON STROMDRÄHTEN
SYSTÈME DE DÉCOUPE DE FILS ÉLECTRIQUES

(30) Priority: 09.12.2016 IT 201600124520
(43) Date of publication of application: 13.06.2018
(73) Proprietor: CEMBRE S.p.A., I-25135 Brescia (IT)
(72) Inventor: BAREZZANI, Gualtiero, I-25135 Brescia (IT); LUCIANI, Gianpaolo, I-25135 Brescia (IT)
(74) Representative: Leihkauf, Steffen Falk

(56) References cited:
- EP-A1- 3 213 880
- EP-A1- 3 213 881
- WO-A1-2016/005838
- WO-A2-2016/112153
- DE-U1-202013 003 068
- Sfe: "Fiche Technique Picoup-EXP-240", , 4 July 2014 (2014-07-04), XP055398025, Retrieved from the Internet: URL:http://docs-europe.electrocomponents.c om/webdocs/145e/0900766b8145ebf6.pdf [retrieved on 2017-08-10]
- Anonymous: "Infared Remote Controlled Safety Cable Spiking / Cable Cutting System | Specialised Force", , 1 April 2015 (2015-04-01), XP055398093, Retrieved from the Internet: URL:https://web.archive.org/web/2015040122 4812/http://www.specialisedforce.com.au/pr oduct/infared-remote-controlled-safety-cab le-spiking-cable-cutting-system [retrieved on 2017-08-10]
- Adam Spafford: "Milwaukee M18 underground cable cutter with remote", , 8 November 2016 (2016-11-08), XP055398034, Retrieved from the Internet: URL:https://www.protoolreviews.com/trades/ electrical-trades/milwaukee-m18-undergroun d-cable-cutter-remote/26549/ [retrieved on 2017-08-10]

## Description

The present invention relates to a system for cutting electric wires with a hydrodynamic cutting tool.

Hydrodynamic cutting tools are often used to perform given cutting operations, e.g. the cutting of electric wires, during electric system installation and maintenance.

Such tools comprise an electric motor and a hydraulic pump which causes an increase of a hydraulic liquid pressure operating on a piston to move the latter against the bias of a pressure spring. In turn, the piston is connected to a movable jaw so as to displace it, during the compression operation, with respect to a fixed jaw of the tool. The jaws may be shaped and/or provided with interchangeable accessory elements, so as to adapt to a particular object, e.g. a metallic conductor to be cut.

Most cutting operations, in particular those performed on electric cables, are hindered by very narrow space conditions and are performed in conditions (of risk due to live electric conductors) which are potentially very dangerous for the operator and harmful for the tools. Consequently, the need is felt to configure the cutting tool so as to reach easily the electric cable to be cut and, at the same time, to reduce the risk of injury to the operator and to limit potential damage to the tool itself.

A further need is that of being able to perform, and control the result of, the cutting operations with appropriate rapidly in order to reduce the time needed to perform the job.

With particular reference to the cutting of electric conductors in environments which are difficult to access, e.g. in underground channels which can be accessed from road level or from ground level by means of a manhole or by means of a trench, the working safety needs, both real and perceived by the operator, have not yet been satisfied.
WO 2016/112153 A2 discloses a method and a device for the severance of electrical power cables. WO 2016/005838 A1 discloses a hydrodynamic compression tool and a method for operating it. DE 20 2013 003068 U1 discloses a safety cutting system. EP 3 213 880 A1 discloses a hydraulic pump for a hydraulic compression tool. EP 3 213 881 A1 discloses a hydrodynamic compression or cutting tool.

lt is thus the object of the present invention to provide a system for cutting electric cables or the like with a hydrodynamic cutting tool having features such as to solve at least some of the drawbacks mentioned with reference to the prior art.

These and other objects are achieved by means of a cutting system according to claim 1. The dependent claims relate to advantageous embodiments.

According to an aspect of the invention, a cutting system with a hydrodynamic cutting tool comprises:
- an electro-hydraulic pump adapted to increase the pressure of a hydraulic liquid,
- a working head which can be positioned distanced from the pump and having two jaws which can be displaced, in response to the increase of the hydraulic liquid pressure, between an open position and a closed position for cutting,
- a pressure flexible tube connected between the pump and the working head so as to communicate the hydraulic liquid pressure from the pump to the working head,
- a hand-held remote control for actuating and controlling the pump from a distance,
- a cutting detector connected to the working head and configured to provide signal of cutting completion confirmation and/or when the jaws reach said closed position,
- actuation communication means adapted to provide pump actuation signals from the remote control to the pump,
- cutting confirmation communication means adapted to supply a cutting completion information from the cutting detector to the user,
wherein:
the hand-held remote control is physically separate from the cutting tool formed by the pump, the pressure flexible tube, the working head and possible accessories physically connected thereto, so as to allow a positioning of the remote control at a safety distance from the cutting tool,
the actuation communication means comprise a wireless connection which exceeds said safety distance,
the cutting confirmation communication means comprise a wireless connection and/or contactless signaling means which exceed said safety distance.

By virtue of the combination of:
- physical separation of the remote control from the cutting tool,
- cutting detector,
- wireless communication of the pump actuation signals, and
- wireless communication or contactless signaling of cutting completion information,
the following is obtained:
- a separation (electrical insulation barrier) of the cutting tool from the operator, protecting the operator from electrocution if live wires are cut (by mistake),
- a physical separation of the cutting tool from the remote control (and thus from the operator who is holding it), protecting the operator and allowing the operator to effectively shelter him or herself from the working zone,
- a clear perception that the operator is remote and completely separated from the working environment potentially subject to dangerous voltage,
- a cutting completion information in order to be able to proceed safely with the next step of working and to be able to stop the hydraulic fluid pressurization in a timely manner, and thus reduce the energy consumption (battery) and extend the working life of the mechanically stressed components.

In order to understand the invention and better appreciate its advantages, the description of some embodiments will be provided below by way of non-limiting example with reference to the figures, in which:

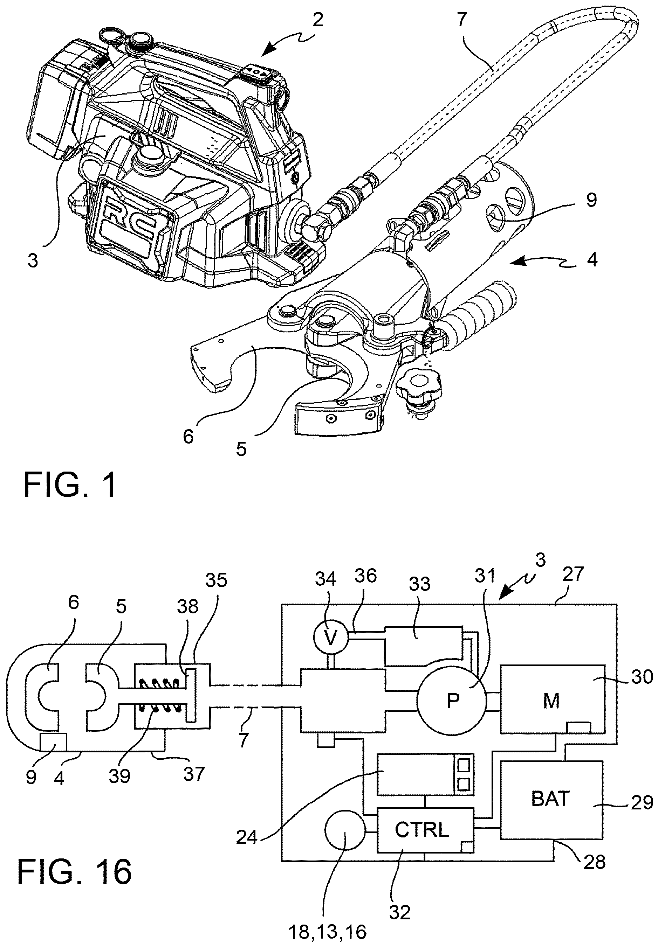

- figure 1 is a perspective view of a cutting tool with a hydraulic pump according to an embodiment;

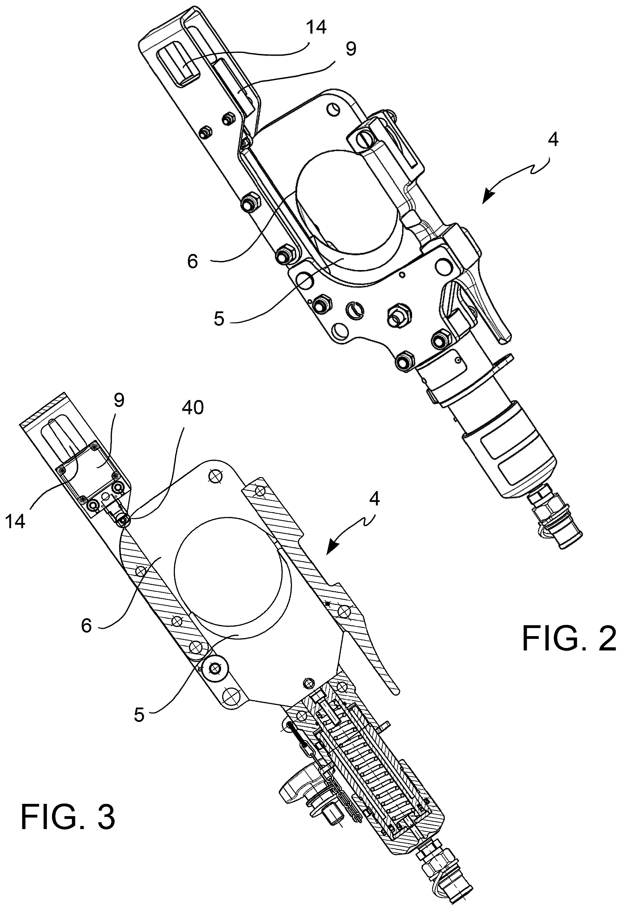

- figure 2 is a perspective view of a working head for a cutting tool, according to an embodiment,
- figure 3 is a longitudinal view of the working head in figure 2,

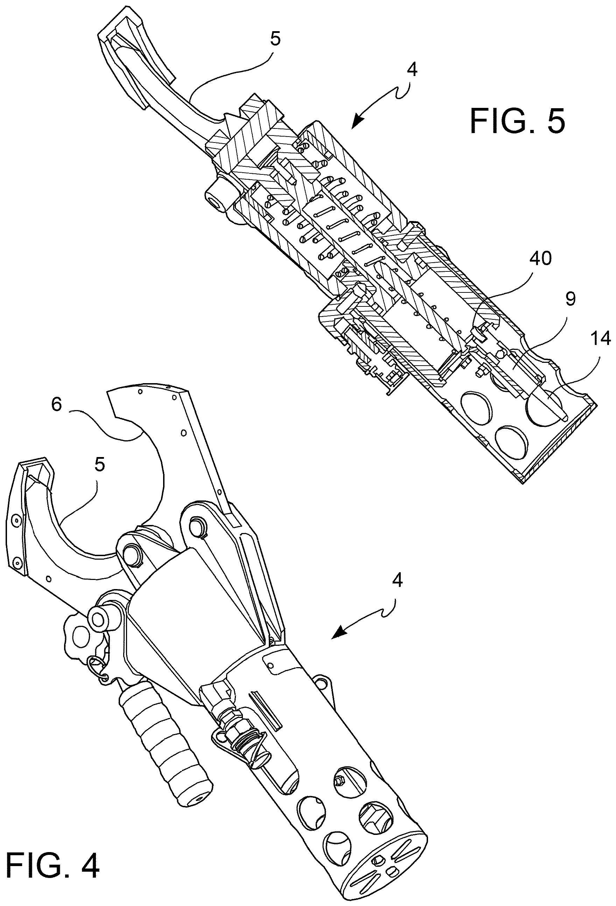

- figure 4 is a perspective view of a working head for a cutting tool, according to a further embodiment,
- figure 5 is a longitudinal view of the working head in figure 4,
- figures from 6 to 15 are diagrammatic views of embodiments of the cutting system according to the invention, wherein the dashed lines denote wireless connections,
- figures 16 is a diagrammatic representation of the cutting tool for the system according to the invention.

With reference to the figures, a cutting system 1 with a hydrodynamic cutting tool 2 comprises:
- an electro-hydraulic pump 3 adapted to increase the pressure of a hydraulic liquid,
- a working head 4 which can be positioned distanced from the pump 3 and having two jaws 5, 6 which can be displaced, in response to the increase of the hydraulic liquid pressure, between an open position and a closed position for performing the cut,
- a pressure flexible tube 7 connected between the pump 3 and the working head 4 so as to communicate the pressure of the hydraulic liquid from the pump 3 to the working head 4,
- a hand-held remote control 8 for actuating and controlling the pump 3 from a distance,
- a cutting detector 9 connected to the working head 4 and configured to provide a signal of cutting completion confirmation and/or when the jaws 5, 6 reach the closed position,
- actuation communication means 10 adapted to provide pump actuation signals from the remote control 8 to the pump 3,
- cutting confirmation communication means 11 adapted to provide cutting completion information from the cutting detector 9 to the user near the remote control 8.

The cutting tool 2 comprises the pump 3, the pressure flexible tube 7, the working head 4 and possible accessories physically connected thereto. The remote control 8 is physically separate from the cutting tool 2 so as to allow a positioning of the remote control 8 at a safety distance from the cutting tool 2.

The actuation communication means 10 comprise an actuation wireless connection exceeding the safety distance, and also the cutting confirmation communication means 11 also comprise a cutting confirmation wireless connection and/or contactless cutting confirmation signaling means (e.g. acoustic or visual) which exceeds the safety distance.

Advantageously, the pressure flexible tube 7 and the hydraulic liquid are electrically insulating and the working head 4 is electrically isolated from the pump 3. Furthermore, the pump and the heads are connected to a ground connection. This protects the pumping unit from high voltage if live cables are cut (by mistake).

### Detailed description of the signal and cutting completion information communication transmission system

According to an embodiment (**Figures from 6 to 13**), the actuation communication means 10 comprise an actuation transmitter 12 connected to, and preferably either mounted on or housed on or in the remote control 8, as well as an actuation receiver 13 connected to and preferably either mounted or housed on the pump 3, which together constitute the aforesaid actuation wireless connection.

The actuation transmitter 12 and the actuation receiver 13 are preferably wireless radio wave, or alternatively infrared radiation or laser, transmitters/receivers and/or transceivers.

The direct wireless transmission between the remote control 8 and pump 3 is fast and requires a minimum number of transmission components.

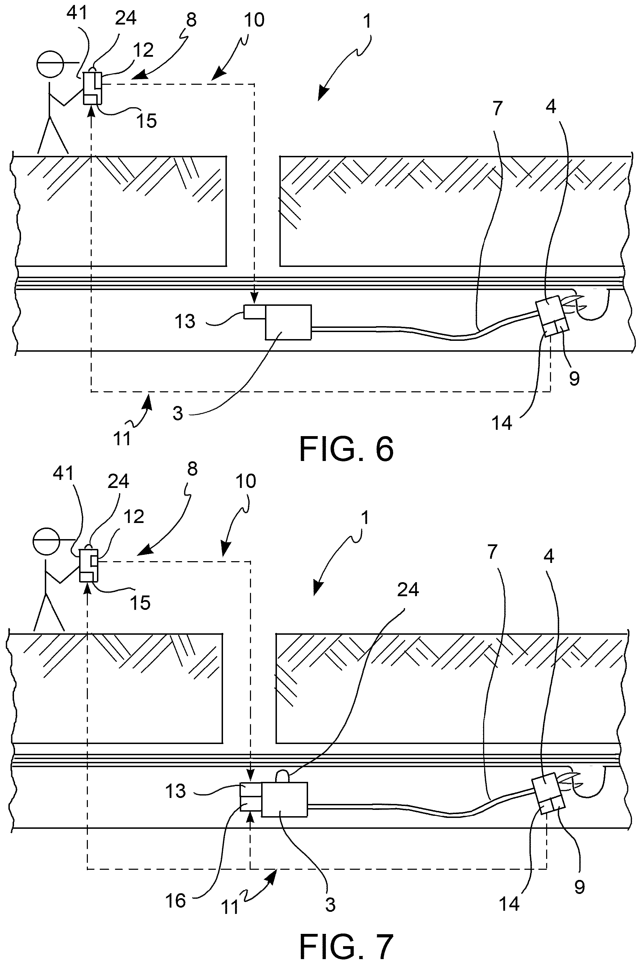

According to an embodiment (**Figures 6 and 7**), the cutting confirmation communication means 11 comprise a cutting confirmation transmitter 14 connected to the cutting detector 9 and preferably mounted on the working head 4, as well as a cutting confirmation receiver 15 connected to, and preferably either mounted on or housed on or in the remote control 8, which together constitute the aforesaid cutting confirmation wireless connection.

The cutting confirmation transmitter 14 and the cutting confirmation receiver 15 are preferably wireless radio wave, or alternatively infrared radiation or laser, transmitters/receivers and/or transceivers.

The direct wireless transmission between the cutting detector 9 and the remote control 8 is fast and requires a minimum number of transmission components.

According to an embodiment (**Figures from 7 to 13**)**,** either alternatively or in addition to the embodiment described with reference to figures 6 and 7, the cutting confirmation communication means 11 comprise a (or the aforesaid) cutting confirmation transmitter 14 connected to the cutting detector 9 and preferably mounted on the working head 4, as well as a cutting confirmation intermediate receiver 16 either mounted or housed on the pump 3 or on an intermediate receiving station 17, physically separate from the cutting tool 2 and from the remote control 8 and which can be positioned freely in an intermediate position either between them or independent from them.

Also in this case, the cutting confirmation transmitter 14 and the cutting confirmation intermediate receiver 16 together make the aforesaid cutting confirmation wireless connection or at least one first wireless connection of a plurality of wireless connections, which together form the aforesaid cutting confirmation wireless connection.

The cutting confirmation transmitter 14 and the intermediate cutting confirmation receiver 16 are preferably wireless radio wave, or alternatively infrared radiation or laser, transmitters/receivers and/or transceivers.

The cutting confirmation intermediate receiver 16 facilitates the transmission of information on cutting completion in case of low transmission power, high transmission distances, tortuous transmission paths and in the presence of wireless transmission obstacles, e.g. opaque or radio-opaque structures or geological formations.

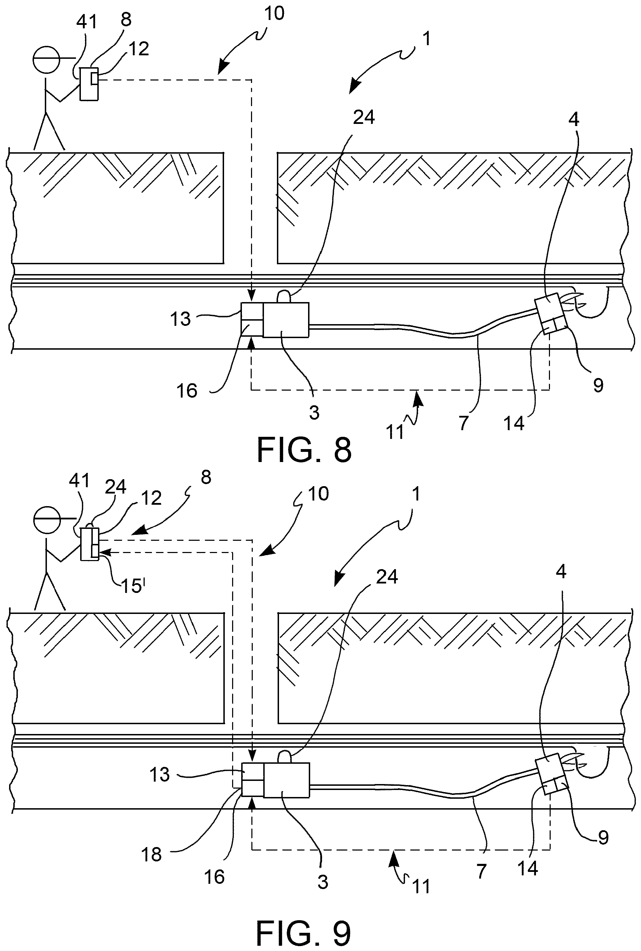

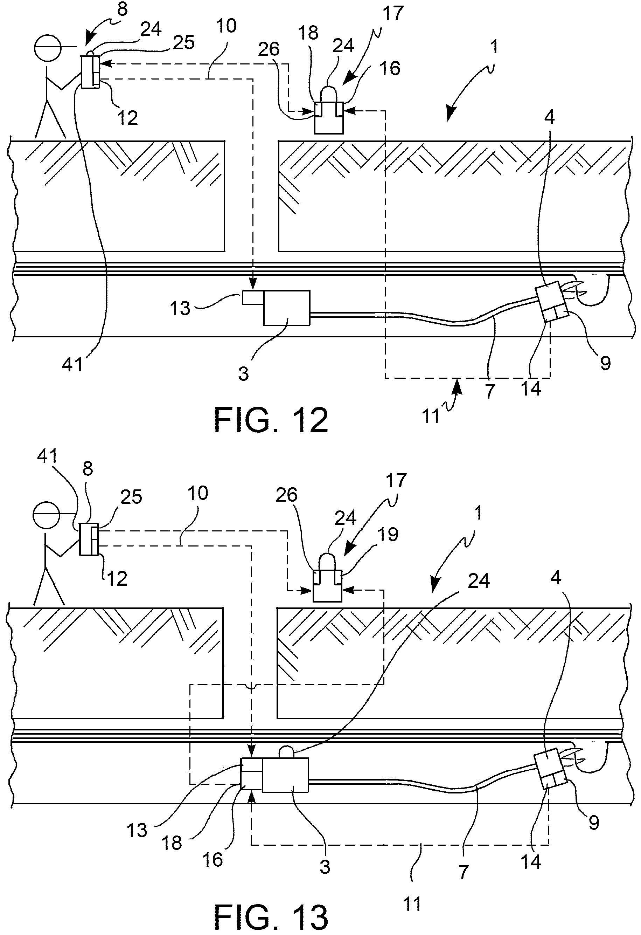

According to an embodiment (**Figure 9**) the cutting confirmation communication means 11 comprise a cutting confirmation intermediate transmitter 18 connected to the cutting confirmation intermediate receiver 16 and either mounted or housed on the pump 3 (**Figure 9**) or on the aforesaid intermediate receiving station 17 (**Figure 12**), as well as a cutting confirmation receiver 15' connected to, and preferably either mounted on or housed on or in the remote control 8, which together make a second wireless connection of two wireless connections which together form the aforesaid cutting confirmation wireless connection.

The cutting confirmation intermediate transmitter 18 and the cutting confirmation receiver 15' are preferably wireless radio wave, or alternatively infrared radiation or laser, transmitters/receivers and/or transceivers.

According to an embodiment (**Figure 13**), the cutting confirmation communication means 11 comprise a cutting confirmation intermediate transmitter 18 either mounted or housed on the pump 3 and connected to the cutting confirmation intermediate receiver 16 of the pump 3, as well as a further cutting confirmation intermediate receiver 19 either mounted or housed on an intermediate receiving station 17, which is physically separate from the cutting tool 2 and from the remote control 8 and which can be positioned freely in an intermediate position either between them or independent from them.

The cutting confirmation intermediate transmitter 18 and the further cutting confirmation intermediate receiver 19 together make a second wireless connection of two wireless connections which together form the above-mentioned cutting confirmation wireless connection.

The further cutting confirmation intermediate transmitter 18 and the cutting confirmation intermediate receiver 19' are preferably wireless radio wave, or alternatively infrared radiation or laser, transmitters/receivers and/or transceivers.

The further cutting confirmation intermediate receiver 19 further facilitates the transmission of information on cutting completion in case of low transmission power, high transmission distances, tortuous transmission paths and in the presence of wireless transmission obstacles, e.g. opaque or radio-opaque structures or geological formations.

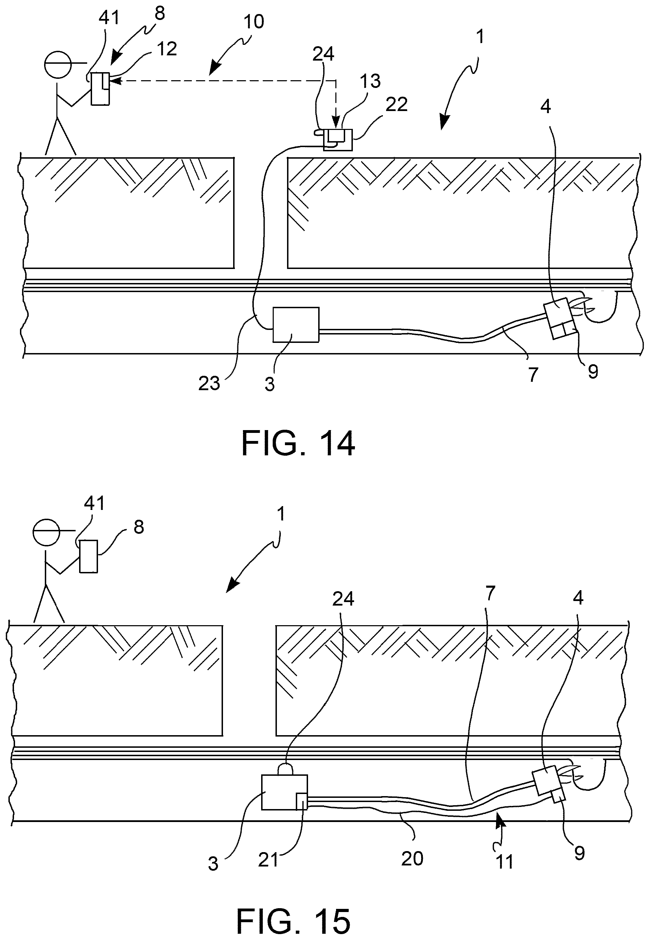

According to a variant embodiment (**Figure 15**), the cutting confirmation means 11 comprise a first physical transmission line 20, extending either inside or outside the pressure flexible tube 7 from the cutting detector 9 to the pump 3, and configured to transmit a predetermined signal (optical or electric) or pulse (mechanical, fluid-dynamic, pneumatic) representative of cutting completion.

The first physical transmission line 20 is preferably electrically insulating and therefore not electrically conductive, and may include, for example, a Bowden cable, a torsional cable, a fluid-dynamic conductor or an optical fiber conductor.

The purpose of the first transmission line 20 is to provide cutting completion information from the cutting detector 9 to the pump 3, and may be provided instead of the aforesaid first cutting confirmation wireless connection, described above, i.e. of the cutting confirmation transmitter 14 and of the cutting confirmation intermediate receiver 16 (**Figures 9****,****13**).

lnstead of the cutting confirmation intermediate receiver 16, conversion means 21 may be provided, e.g. an electrical or electronic switching circuit, connected between the first transmission line 20 and the cutting confirmation intermediate transmitter 18 and adapted to convert the pulse or signal supplied by the first transmission line 20 into a corresponding electrical signal and to transmit the corresponding electric signal to the intermediate cutting confirmation transmitter 18 and/or to a control electronics of the pump 3.

According to a further embodiment (**Figure 14**), the pump actuation means 10 comprise a transmission cable 23, e.g. electric or optical, connected to (an electronic control of) the pump 3 and extending from the pump 3 to the actuating receiver 13, which in the embodiment is mounted on or housed in an auxiliary reception station 22, which can be distanced from (here not separated) from the cutting tool 2 but in all cases separated from the remote control 8 and which can be freely positioned in an intermediate position between them or independently from them.

The auxiliary receiving station 22 may have the further features described above with reference to the intermediate receiving station 17, except for the separation of the cutting tool 2, and the auxiliary receiving station 22 and the intermediate receiving station 17 may be performed by a single device.

According to embodiments (**Figures from 6 to 15**), the cutting confirmation communication means 11 comprise optical and/or acoustic signaling means 24, which are activated in response to the reception of the cutting completion confirmation signal so as to alert the operator.

The signaling means 24 may comprise a light indicator, e.g. LED and/or an optical display and/or an acoustic indicator, e.g. a beeper, arranged in the remote control 8 (**Figures 6, 7****,** **9****,** **12**).

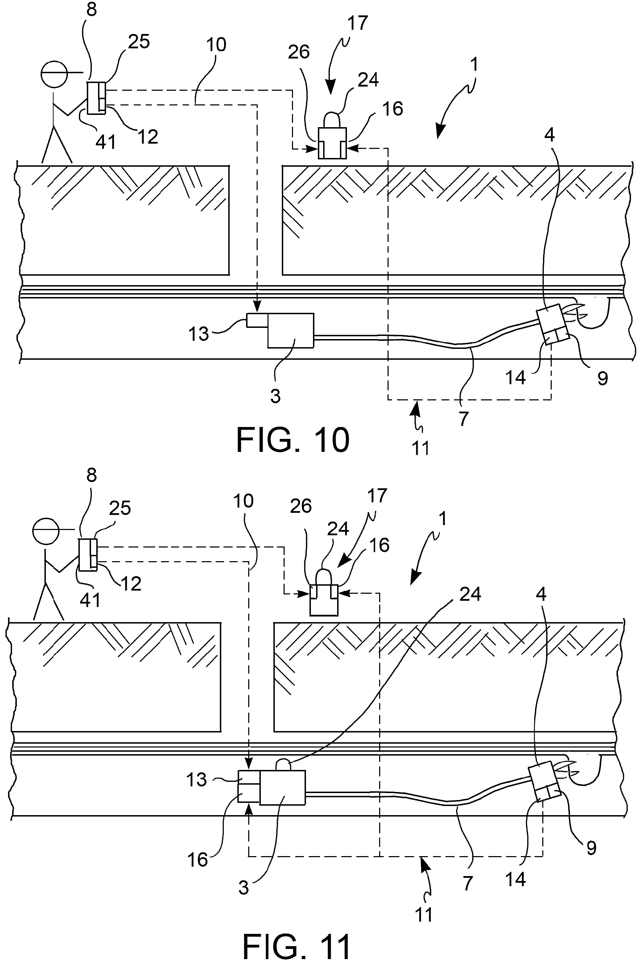

The signaling means 24 may comprise a light indicator, e.g. an LED group or a very bright light source, preferably directional, e.g. a main beam light and/or an acoustic indicator, also preferably powerful in the order of an automotive horn, arranged on the pump 3 (**Figures 7****,** **8****,** **9****,** **11****,** **13****,** **15**) and/or in the intermediate reception station 17 (**Figures 10, 11****,** **12, 13**) or in the auxiliary receiving station 22, and visible/audible at a distance, particularly perceivable from the outside of a manhole or a trench when the pump 3 or the reception station with the signaling means 24 are positioned inside the manhole or in the trench, as shown in the figures.

By virtue of the signaling means 24, the operator is immediately alerted that the cut has been completed and can proceed promptly with the successive step of working, in particular with the deactivation of the pump 3, without needing to leave his or her sheltered position distanced from working region.

According to an advantageous embodiment, the cutting completion signal is also automatically transmitted to the control electronics of the pump 3 which controls the completion and ending of the working cycle (cutting cycle) according to the cutting completion signal.

ln particular, the control electronics of the pump 3, once cutting completion is confirmed (which corresponds to the reaching of the closed position of the jaws 5, 6 = first working cycle interruption criterion), automatically interrupts the further pressurization of the hydraulic fluid, in particular, deactivates pump 3. This avoids an unnecessary further increase of the pressure of the hydraulic fluid, of the mechanical stress of the head and the electric power consumption of the battery, after the cut has been already completed, until a maximum pressure is reached which causes the opening of a maximum pressure valve (second working cycle interruption criterion) or until predetermined operating condition combinations occur.

According to embodiments, the cutting completion confirmation signal transmission to the pump 3 control electronic may be performed:
- by the remote control 8 by means of the actuation transmitter 12 and the actuation receiver 13 (**Figures 6, 7****,** **9****,** **12**), and/or
- by the cutting confirmation intermediate receiver 16 aboard the pump 3 (**Figure 7****,** **8****,** **9****,** **11****,** **13**) or by the conversion means 21 aboard the pump 3 (**Figure 15**).

Either alternatively or additionally, a transmission of a pumping interruption command to the electronic control of the pump 3 may be brought about by the operator, in non-automatic manner, by means of manual actuation (of a button) of the remote control 8, and with the help of the actuation transmitter 12 and of the actuation receiver 13.

ln embodiments (**Figures 10-13**), the system may further comprise a station actuation transmitter 25 connected to, and preferably either mounted on or housed on or in the remote control 8, as well as a station actuation receiver 26 connected to, and preferably mounted on or housed in the intermediate receiving station 17, for automatically switching on the intermediate receiving station 17 together with the actuation of the pump 3. In this manner, the need is avoided for the operator to approach the intermediate receiving station 17 to switch it on and the electric energy consumption of the intermediate receiving station 17 is reduced to only the real period of operation of the pump 3.

The station actuation transmitter 25 and the station actuation receiver 26 are preferably wireless radio wave, or alternatively infrared radiation or laser, transmitters/receivers and/or transceivers.

The described transmitters and receivers are connected to the control electronics of the modules with which they are associated and can be controlled by these control electronics in a known manner and therefore not described in detail. Furthermore, the described transmitters and receivers can be separate devices and dedicated only to the described functions. This allows the use of low-cost, commercially available, wireless transmission systems, in particular wireless radio transmission, optimized for certain functions, such as a push-switch displacement sensor with the switch pushing confirmation radio transmitter aboard and with a dedicated radio receiver, of small size and low cost.

Alternatively, the described transmitters and receivers can be made by using more versatile transmitters, receivers or transceivers which perform a plurality of the described wireless transmission and receiving features.

For example, the remote control 8 may comprise a transceiver which performs the functions of the transmitters and receivers 12, 15 or 12, 15, 25. Similarly, the pump 3 may comprise a transceiver which performs the functions of the transmitters and receivers 13, 16 or 13, 16, 18. Again similarly, the intermediate receiving station 17 may comprise a transceiver which performs the functions of the transmitters and receivers 16, 26 or 16, 26, 18 or 19, 26.

### Detailed description of the pump 3

According to an embodiment, the pump 3 comprises:
- a pump housing 27,
- an accumulator seat 28, adapted to receive an accumulator 29 and having electrical terminals which make an electric contact with the accumulator 29,
- an electric motor 30, supported by the pump housing 27, which can be supplied by the accumulator 29,
- a hydrodynamic assembly 31 (pumping assembly), supported by the pump housing 27 and connected to the electric motor 30 to increase the pressure of a hydraulic liquid in response to the movement of the electric motor 30,
- an electronic control circuit 32, connected to the electric motor 30 and to the accumulator 29 for controlling the electric motor 30.

The hydrodynamic pump 31 comprises a tank 33, a pumping cylinder-piston assembly and a maximum pressure valve 34.

The pumping cylinder-pump assembly may comprise a pumping cylinder with an intake opening connected to the tank 33 by means of a check valve, which allows the flow of hydraulic oil from the tank 33 into the pumping cylinder, and a discharge opening in communication with the pressure flexible tube 7 and, consequently, with an actuation cylinder 35 of the working head 4. A check valve is arranged in the discharge opening to allow the flow of hydraulic oil from the pumping cylinder towards the actuation cylinder 35, but not the other way. In the pumping cylinder there may be accommodated a pumping piston coupled so as to translate together with a pivoting member actuated by the electric motor 30.

The maximum pressure valve 34 may be arranged in a return pipe 36 which connects the actuation cylinder 35 to the tank 33.

ln this manner, the actuation of the electric motor 30 operates the hydrodynamic assembly 31 (pumping assembly) and moves the jaws 5, 6 from the open position either towards or into the closed position until a predetermined maximum calibration pressure is reached in the actuation piston 35. When the maximum calibration pressure is reached, the maximum pressure valve 34 automatically opens the fluid return pipe 36 to discharge (at least part of) the pressure liquid from the actuation cylinder 35 into the tank 33.

### Detailed description of the working head 4

The working head 4 may comprise a body 37 with the actuation cylinder 35 which receives an actuation piston 38 which can be displaced by the pressurized fluid.

The working head 4 further comprises the two jaws 5, 6 connected to the body 37 in mutually movable manner and connected to the actuation piston 38 so that, in response to the displacement of the actuation piston 38, the jaws 5, 6 perform a relative movement between an open position and a closed position to perform the cutting.

A return spring 39 acts on the actuation piston 38 so as to elastically bias it to a rest position, in which the jaws 5, 6 are in the open position.

The working head 4 is removably connectible to the pressure pipe 7. Either alternatively or additionally, the pressure flexible tube 7 may be removably connected to the pump housing 27.

### Detailed description of the cutting detector 9

The cutting detector 9 is connected to the working head 4 so as to detect the arrival of one or both cutting jaws 5, 6 in the closed position or the arrival of the actuation piston 38 in the end-of-stroke position corresponding to the closed position of the jaws 5, 6. The cutting detector may comprise an electromechanical sensor, e.g. a position switch, an optical switch, a magnetic proximity sensor, contact sensor or a potentiometer.

Advantageously, the cutting detector 9 comprises a movable member 40, which is displaced (by at least one of the jaws 5, 6 or by the actuating piston 38) when the closed position of the jaws 5, 6 is reached and a part of the displacement energy of the movable member 40 is used to energize and actuate the cutting confirmation transmitter 14. Preferably, a further part of the displacement energy of the movable member 40 is accumulated for the reception, by the cutting confirmation transmitter 14, of a confirmation signal (from the cutting confirmation receiver 15, 15') that the first cutting confirmation signal was received and, in the negative case, to repeat the transmission of the cutting confirmation signal.

The need for an electric battery for the cutting detector 9 is avoided in this manner.

ln this embodiment, the cutting confirmation transmitter 14 and the cutting confirmation receiver 15, 15' are configured as transceivers.

### Detailed description of the hand-held remote control 8

The hand-held remote control 8 comprises a control panel 41 for manually switching on and off (the electric motor 30 of) the pump 3.

ln an embodiment, the control panel 41 also allows the manual selection of an operating mode of the pump 3 from a plurality of preset operating modes, and the hand-held remote control 8 may comprise a display which shows the selected operating mode and/or the operating parameters and/or information on the cutting execution state.

### Detailed description of the intermediate receiving station 17

ln an embodiment, the intermediate receiving station 17 is portable, preferably of medium-to-small size, e.g. in the order of 15cm X 15cm X 15cm, but sufficiently large to be clearly visible at a distance from 5m to 15m. The intermediate receiving station 17 may comprise its own battery, preferably rechargeable, and an electronic control circuit connected with and configured to manage and control the battery, the receivers and/or the transmitters 16, 26, 18 aboard the intermediate station 17 and the signaling means 24.

ln an embodiment, the working head 4 may comprise compression jaws instead of the described cutting jaws 5, 6, and thus be adapted to compress cables or electrical connections or other workpieces with the same features described with reference to the cutting of cables. The cut detector and the cutting completion signals described herein will act respectively as compression sensor and as a compression completion signal.

## Claims

1. A cutting system (1) with a hydrodynamic cutting tool (2) for cutting electric cables, comprising:
- an electro-hydraulic pump (3) adapted to carry out a pressure increase of a hydraulic liquid,
- a working head (4) positionable spaced from the electro-hydraulic pump (3) and having two jaws (5, 6) movable, in response to the increase of the hydraulic liquid pressure, between an open position and a closed position for carrying out the cutting,
- a pressure flexible tube (7) connected between the electro-hydraulic pump (3) and the working head (4) so as to communicate the pressure of the hydraulic liquid from the electro-hydraulic pump (3) to the working head (4),
- a hand-held remote controller (8) for driving and controlling the electro-hydraulic pump (3) from a distance,
- a cutting detector (9) connected to the working head (4) and configured to detect the completion of the cutting,
- actuation communication means (10) adapted to provide pump actuation signals from the hand-held remote controller (8) to the electro-hydraulic pump (3),
- cutting confirmation communication means (11) adapted to provide a cutting completion information from the cutting detector (9) to the user in proximity of the hand-held remote controller,
wherein the hand-held remote controller (8) is physically separate from the cutting tool (2) formed by the electro-hydraulic pump (3), the pressure flexible tube (7), the working head (4) and possible accessories physically connected thereto, so as to allow a positioning of the hand-held remote controller (8) at the safety distance from the cutting tool (2),
wherein the actuation communication means (10) can establish an actuation wireless connection exceeding the safety distance, and also the cutting confirmation communication means (11) comprise contactless cutting confirmation signaling means that provides a signal to the user in proximity of the hand-held remote controller, **characterized in that**:
the cutting confirmation communication means (11) comprise a cutting confirmation transmitter (14) connected to the cutting detector (9) and mounted to the working head (4), as well as a cutting confirmation intermediate receiver (16) housed on the electro-hydraulic pump (3), wherein the cutting confirmation transmitter (14) and the cutting confirmation intermediate receiver (16) together realize a first wireless connection of said cutting detector (9) with said contactless cutting confirmation signaling means,
wherein the contactless cutting confirmation signaling means of the cutting confirmation communication means (11) comprise optical and acoustic signaling means (24) which are activated in response to the receipt, by the cutting confirmation intermediate receiver (16), of a cutting completion confirmation signal from the cutting confirmation transmitter (14), so as to alert the user,
wherein the optical and acoustic signaling means (24) comprise a light indicator and an acoustic indicator arranged on the electro-hydraulic pump (3) and visible and audible at a distance,
wherein the cutting completion confirmation signal or a corresponding command signal is automatically transmitted also to a control electronics of the electro-hydraulic pump (3) which ends the working cycle in dependency of the cutting completion confirmation by deactivating the electro-hydraulic pump (3) and interrupting a further pressurization of the hydraulic fluid,
wherein the transmission of the cutting completion confirmation signal or of the corresponding command signal to the control electronics of the electro-hydraulic pump (3) is performed by the cutting confirmation intermediate receiver (16) on board of the electro-hydraulic pump (3).

2. A cutting system (1) according to claim 1, wherein the pressure flexible tube (7) and the hydraulic liquid are electrically insulating and the working head (4) is electrically isolated from the electro-hydraulic pump (3).

3. A cutting system (1) according to claim 1 or 2, wherein the actuation communication means (10) comprise an actuation transmitter (12) connected to and housed on the remote controller (8) and an actuation receiver (13) connected to and housed on the electro-hydraulic pump (3) which realize together said wireless actuation connection.

4. A cutting system (1) according to one of the preceding claims, wherein the cutting confirmation communication means (11) comprise a cutting confirmation transmitter (14) connected to the cutting detector (9) and mounted to the working head (4), as well as a cutting confirmation receiver (15) connected to and housed on the remote controller (8) and which realize together said wireless cutting confirmation connection.

5. A cutting system (1) according to one of the preceding claims, wherein the cutting confirmation transmitter (14) and the cutting confirmation intermediate receiver (16) together realize a first wireless connection of a plurality of wireless connections which form together a cutting confirmation wireless connection.

6. A cutting system (1) according to claim 5, wherein the cutting confirmation communication means (11) comprise a cutting confirmation intermediate transmitter (18) connected to the cutting confirmation intermediate receiver (16) at the electro-hydraulic pump (3), as well as a cutting confirmation receiver (15') connected to and housed on the remote controller (8) which together realize a second wireless connection of two wireless connections forming together said cutting confirmation wireless connection.

7. A cutting system (1) according to claim 5, wherein the cutting confirmation communication means (11) comprise a cutting confirmation intermediate transmitter (18) connected with the cutting confirmation intermediate receiver (16) at the electro-hydraulic pump (3), as well as a further cutting confirmation intermediate receiver (19) mounted to or housed on an intermediate receiving station (17) physically separate from the cutting tool (2) and from the remote controller (8) and freely positionable in an intermediate position therebetween or an independent position therefrom,
wherein the cutting confirmation intermediate transmitter (18) and the further cutting confirmation intermediate receiver (19) together realize a second wireless connection of two wireless connections which form together the above-mentioned cutting confirmation wireless connection.

8. A cutting system (1) according to claim 1, wherein the cutting confirmation communication means (11) comprise a first physical transmission line (20), extended from the cutting detector (9) to the electro-hydraulic pump (3) and configured to transmit a predetermined signal or pulse representative of the completion of the cutting.

9. A cutting system (1) according to claim 4, wherein the signaling means (24) comprise a light indicator and an acoustic indicator arranged in the remote controller (8).

10. A cutting system (1) according to one of the preceding claims, wherein the cutting detector (9) is connected to the working head (4) so as to detect the arrival of one or both cutting jaws (5, 6) in the closed position or the arrival of the actuation piston (38) in the end-of-stroke position corresponding to the closed position of the jaws (5, 6).

11. A cutting system (1) according to one of the preceding claims, wherein the cutting detector (9) comprises a movable member (40) which is moved by at least one of the jaws (5, 6) or by an actuating piston (38) of the working head (4) at the achievement of the closed position of the jaws (5, 6) and a part of the movement energy of the movable member (40) is used to power and actuate the cutting confirmation transmitter (14), the cutting system having no electric battery for the cutting detector (9).

12. A cutting system (1) according to claim 11, wherein a further part of the displacement energy of the movable member (40) is accumulated for the reception, by the cutting confirmation transmitter (14), of a confirmation signal from the cutting confirmation receiver (15, 15') that the first cutting confirmation signal was received and, in the negative case, to repeat the transmission of the cutting confirmation signal.

## Patentansprüche

1. Schneidesystem (1) mit einem hydrodynamischen Schneidewerkzeug (2) zum Schneiden von elektrischen Kabeln, umfassend:
- eine elektro-hydraulische Pumpe (3), welche dazu eingerichtet ist, einen Druckanstieg einer Hydraulikflüssigkeit durchzuführen,
- einen Arbeitskopf (4), welcher von der elektro-hydraulischen Pumpe (3) beabstandet positionierbar ist und zwei Backen (5, 6) aufweist, welche als Reaktion auf den Anstieg des Hydraulikflüssigkeit-Drucks zwischen einer offenen Position und einer geschlossenen Position zum Durchführen des Schneides bewegbar sind,
- eine druckflexible Leitung (7), welche zwischen der elektro-hydraulischen Pumpe (3) und dem Arbeitskopf (4) verbunden ist, um so den Druck der Hydraulikflüssigkeit von der elektro-hydraulischen Pumpe (3) zu dem Arbeitskopf (4) zu kommunizieren,
- eine tragbare Fernsteuerung (8) zum Betreiben und Steuern der elektro-hydraulischen Pumpe (3) aus einer Distanz,
- einen Schneidedetektor (9), welcher mit dem Arbeitskopf (4) verbunden und dazu eingerichtet ist, das Vollenden des Schneides zu detektieren,
- Betätigungs-Kommunikationsmittel (10), welche dazu eingerichtet sind, Pumpen-Betätigungssignale von der tragbaren Fernbedienung (8) zu der elektro-hydraulischen Pumpe (3) bereitzustellen,
- Schneidebestätigung-Kommunikationsmittel (11), welche dazu eingerichtet sind, eine Schneide-Vollendungsinformation von dem Schneidedetektor (9) zu dem Benutzer in der Nähe der tragbaren Fernbedienung bereitzustellen,
wobei die tragbare Fernbedienung (8) von dem Schneidewerkzeug (2) physisch separat ist, welches durch die elektro-hydraulische Pumpe (3), die druckflexible Leitung (7), der Arbeitskopf (4) und mögliche physisch damit verbundene Anbauteile gebildet ist, um so ein Positionieren der tragbaren Fernbedienung (8) in einem sicheren Abstand von dem Schneidewerkzeug (2) zu erlauben, wobei die Betätigungs-Kommunikationsmittel (10) eine drahtlose Betätigungsverbindung herstellen können, welche den Sicherheitsabstand übersteigt, und wobei ebenfalls die Schneidebestätigung-Kommunikationsmittel (11) kontaktlose Schneidebestätigung-Ssignalmittel umfassen, welche ein Signal an den Benutzer in der Nähe der tragbaren Fernsteuerung bereitstellen, **dadurch gekennzeichnet, dass**:
die Schneidebestätigung-Kommunikationsmittel (11) einen Schneidebestätigung-Transmitter (14) umfassen, welcher mit dem Schneidedetektor (9) verbunden und an dem Arbeitskopf (4) angebracht ist, sowie einen Schneidebestätigung-Zwischenempfänger (16), welcher an der elektro-hydraulischen Pumpe (3) aufgenommen ist, wobei der Schneidebestätigung-Transmitter (14) und der Schneidebestätigung-Zwischenempfänger (16) gemeinsam eine erste drahtlose Verbindung des Schneidedetektors (9) mit den kontaktlosen Schneidebestätigung-Signalmitteln herstellen,
wobei die kontaktlosen Schneidebestätigung-Signalmittel der Schneidebestätigung-Kommunikationsmittel (11) optische und akustische Signalmittel (24) umfassen, welche als Reaktion auf das Empfangen eines Schneidevollendungs-Bestätigungssignals von dem Schneidebestätigung-Transmitter (14) durch den Schneidebestätigung-Zwischenempfänger (16) aktiviert werden, um so den Benutzer zu alarmieren,
wobei die optischen und akustischen Signalmittel (24) eine Lichtanzeige und eine akustische Anzeige umfassen, welche an der elektro-hydraulischen Pumpe (3) angeordnet und in einem Abstand sichtbar und hörbar sind,
wobei das Schneidevollendungs-Bestätigungssignal oder ein entsprechendes Anweisungssignal automatisch ebenfalls zu einer Steuerelektronik der elektro-hydraulischen Pumpe (3) übertragen wird, welche den Arbeitszyklus abhängig von der Schneidevollendungs-Bestätigung durch Deaktivieren der elektro-hydraulischen Pumpe (3) und Unterbrechen eines weiteren unter Druck Setzens der Hydraulikflüssigkeit beendet,
wobei die Übertragung des Schneidevollendungs-Bestätigungssignals oder des entsprechenden Anweisungssignals zu der Steuerelektronik der elektro-hydraulischen Pumpe (3) von dem Schneidebestätigungs-Zwischenempfänger (16) an Bord der elektro-hydraulischen Pumpe (3) durchgeführt wird.

2. Schneidesystem (1) nach Anspruch 1, wobei die druckflexible Leitung (7) und die Hydraulikflüssigkeit elektrisch isolierend sind und der Arbeitskopf (4) von der elektro-hydraulischen Pumpe (3) elektrisch isoliert ist.

3. Schneidesystem (1) nach Anspruch 1 oder 2, wobei die Betätigungs-Kommunikationsmittel (10) einen Betätigungs-Transmitter (12) umfassen, welcher mit der Fernsteuerung (8) verbunden und an ihr aufgenommen ist, sowie einen Betätigungsempfänger (13), welcher mit der elektro-hydraulischen Pumpe (3) verbunden und an ihr aufgenommen ist, welche gemeinsam die drahtlose Betätigungsverbindung herstellen.

4. Schneidesystem (1) nach einem der vorhergehenden Ansprüche, wobei die Schneidebestätigung-Kommunikationsmittel (11) einen Schneidebestätigung-Transmitter (14) umfassen, welcher mit dem Schneidedetektor (9) verbunden und an dem Arbeitskopf (4) angebracht ist, sowie einen Schneidebestätigung-Empfänger (15), welcher mit der Fernsteuerung (8) verbunden und an ihr aufgenommen ist, und welche gemeinsam die drahtlose Schneidebestätigungs-Verbindung herstellen.

5. Schneidesystem (1) nach einem der vorhergehenden Ansprüche, wobei der Schneidebestätigungs-Transmitter (14) und der Schneidebestätigungs-Zwischenempfänger (16) gemeinsam eine erste drahtlose Verbindung einer Mehrzahl von drahtlosen Verbindungen herstellen, welche gemeinsam eine drahtlose Schneidebestätigung-Verbindung bilden.

6. Schneidesystem (1) nach Anspruch 5, wobei die Schneidebestätigung-Kommunikationsmittel (11) einen Schneidebestätigung-Zwischentransmitter (18) umfassen, welcher mit dem Schneidebestätigung-Zwischenempfänger (16) an der elektro-hydraulischen Pumpe (3) verbunden ist, sowie einen Schneidebestätigung-Empfänger (15'), welcher mit der Fernsteuerung (8) verbunden und an ihr aufgenommen ist, welche gemeinsam eine zweite drahtlose Verbindung von zwei drahtlosen Verbindungen herstellen, welche gemeinsam die drahtlose Schneidebestätigung-Verbindung bilden.

7. Schneidesystem (1) nach Anspruch 5, wobei die Schneidebestätigung-Kommunikationsmittel (11) einen Schneidebestätigung-Zwischentransmitter (18) umfassen, welcher mit dem Schneidebestätigung-Zwischenempfänger (16) an der elektro-hydraulischen Pumpe (3) verbunden ist, sowie einen weiteren Schneidebestätigung-Zwischenempfänger (19), welcher an einer Zwischen-Empfangsstation (17) angebracht oder aufgenommen ist, welche physisch separat von dem Schneidewerkzeug (2) und von der Fernsteuerung (8) und frei positionierbar in einer Zwischenposition dazwischen oder einer davon unabhängigen Position ist,
wobei der Schneidebestätigung-Zwischentransmitter (18) und der weitere Schneidebestätigung-Zwischenempfänger (19) gemeinsam eine zweite drahtlose Verbindung von zwei drahtlosen Verbindungen herstellen, welche gemeinsam die oben-erwähnte drahtlose Schneidebestätigung-Verbindung bilden.

8. Schneidesystem (1) nach Anspruch 1, wobei die Schneidebestätigung-Kommunikationsmittel (11) eine erste physische Übertragungsleitung (20) umfassen, welche sich von dem Schneidedetektor (9) zu der elektro-hydraulischen Pumpe (3) erstreckt und dazu eingerichtet ist, ein vorbestimmtes Signal oder einen Puls zu übertragen, welches/welcher das Vollenden des Schneides repräsentiert.

9. Schneidesystem (1) nach Anspruch 4, wobei die Signalmittel (24) eine Lichtanzeige und eine akustische Anzeige umfassen, welche in der Fernsteuerung (8) angeordnet sind.

10. Schneidesystem (1) nach einem der vorhergehenden Ansprüche, wobei der Schneidedetektor (9) mit dem Arbeitskopf (4) verbunden ist, um so die Ankunft von einem oder beiden Schneidebacken (5, 6) in der geschlossenen Position oder die Ankunft des Betätigungskolbens (38) in der Endhub-Position entsprechend der geschlossenen Position der Backen (5, 6) zu detektieren.

11. Schneidesystem (1) nach einem der vorhergehenden Ansprüche, wobei der Schneidedetektor (9) ein bewegliches Element (40) umfasst, welches durch wenigstens einen der Backen (5, 6) oder durch einen Betätigungskolben (38) des Arbeitskopfes (4) beim Erreichen der geschlossenen Position der Backen (5, 6) bewegt wird, und wobei ein Teil der Bewegungsenergie des beweglichen Elements (40) verwendet wird, um den Schneidebestätigung-Transmitter (14) mit Leistung zu versorgen und zu betätigen, wobei das Schneidesystems keine elektrische Energie für den Schneidedetektor (9) aufweist.

12. Schneidesystem (1) nach Anspruch 11, wobei ein weiterer Teil der Verlagerungsenergie des beweglichen Elements (40) für den Empfang eines Bestätigungssignals von dem Schneidebestätigung-Empfänger (15, 15') durch den Schneidebestätigung-Transmitter (14) akkumuliert wird, dass das erste Schneide-Bestätigungssignal empfangen worden ist und, in dem negativen Fall, zum Wiederholen der Übertragung des Schneide-Bestätigungssignals.

## Revendications

1. Système de coupe (1) avec un outil de coupe hydrodynamique (2) pour couper des câbles électriques, comprenant :
- une pompe électrohydraulique (3) adaptée pour réaliser une augmentation de pression d'un liquide hydraulique,
- une tête de travail (4) positionnable espacée de la pompe électrohydraulique (3) et ayant deux mâchoires (5, 6) mobiles, en réponse à l'augmentation de la pression de liquide hydraulique, entre une position ouverte et une position fermée pour réaliser la découpe,
- un tube flexible de pression (7) raccordé entre la pompe électrohydraulique (3) et la tête de travail (4) de façon à communiquer la pression du liquide hydraulique de la pompe électrohydraulique (3) à la tête de travail (4),
- un dispositif de commande à distance portable (8) pour entraîner et commander la pompe électrohydraulique (3) à distance,
- un détecteur de coupe (9) raccordé à la tête de travail (4) et configuré pour détecter la concrétisation de la coupe,
- des moyens de communication d'actionnement (10) adaptés pour fournir des signaux d'actionnement de pompe du dispositif de commande à distance portable (8) à la pompe électrohydraulique (3),
- des moyens de communication de confirmation de coupe (11) adaptés pour fournir des informations de réalisation de coupe du détecteur de coupe (9) à l'utilisateur à proximité du dispositif de commande à distance portable,
dans lequel le dispositif de commande à distance portable (8) est séparé physiquement de l'outil de coupe (2) formé par la pompe électrohydraulique (3), le tube flexible de pression (7), la tête de travail (4) et des accessoires possibles qui y sont raccordés physiquement, de manière à permettre un positionnement du dispositif de commande à distance portable (8) à une distance de sécurité de l'outil de coupe (2),
dans lequel les moyens de communication d'actionnement (10) peuvent établir un raccordement sans fil d'actionnement dépassant la distance de sécurité, et également les moyens de communication de confirmation de coupe (11) comprennent des moyens de signalisation de confirmation de coupe sans contact qui fournissent un signal à l'utilisateur à proximité du dispositif de commande à distance portable, **caractérisé en ce que** :
les moyens de communication de confirmation de coupe (11) comprennent un transmetteur de confirmation de coupe (14) raccordé au détecteur de coupe (9) et monté sur la tête de travail (4), ainsi qu'un récepteur intermédiaire de confirmation de coupe (16) logé sur la pompe électrohydraulique (3), dans lequel le transmetteur de confirmation de coupe (14) et le récepteur intermédiaire de confirmation de coupe (16) réalisent conjointement un premier raccordement sans fil dudit détecteur de coupe (9) avec lesdits moyens de signalisation de confirmation de coupe sans contact,
dans lequel les moyens de signalisation de confirmation de coupe sans contact des moyens de communication de confirmation de coupe (11) comprennent des moyens de signalisation optique et acoustique (24) qui sont activés en réponse à la réception, par le récepteur intermédiaire de confirmation de coupe (16), d'un signal de confirmation de concrétisation de coupe en provenance du transmetteur de confirmation de coupe (14), de façon à alerter l'utilisateur,
dans lequel les moyens de signalisation optique et acoustique (24) comprennent un indicateur de lumière et un indicateur acoustique agencés sur la pompe électrohydraulique (3) et visibles et audibles à distance,
dans lequel le signal de confirmation de réalisation de coupe ou un signal d'instruction correspondant est transmis automatiquement également à une électronique de commande de la pompe électrohydraulique (3) qui termine le cycle de travail en fonction de la confirmation de réalisation de coupe en désactivant la pompe électrohydraulique (3) et en interrompant une pressurisation supplémentaire du fluide hydraulique, dans lequel la transmission du signal de confirmation de concrétisation de coupe ou du signal d'instruction correspondant à l'électronique de commande de la pompe électrohydraulique (3) est réalisée par le récepteur intermédiaire de confirmation de coupe (16) à bord de la pompe électrohydraulique (3).

2. Système de coupe (1) selon la revendication 1, dans lequel le tube flexible de pression (7) et le liquide hydraulique sont électriquement isolants et la tête de travail (4) est isolée électriquement de la pompe électrohydraulique (3).

3. Système de coupe (1) selon la revendication 1 ou 2, dans lequel les moyens de communication d'actionnement (10) comprennent un transmetteur d'actionnement (12) raccordé au et logé sur le dispositif de commande à distance (8) et un récepteur d'actionnement (13) raccordé à et logé sur la pompe électrohydraulique (3) qui réalisent conjointement ledit raccordement d'actionnement sans fil.

4. Système de coupe (1) selon l'une des revendications précédentes, dans lequel les moyens de communication de confirmation de coupe (11) comprennent un transmetteur de confirmation de coupe (14) raccordé au détecteur de coupe (9) et monté sur la tête de travail (4), ainsi qu'un récepteur de confirmation de coupe (15) raccordé au et logé sur le dispositif de commande à distance (8) et qui réalisent conjointement ledit raccordement de confirmation de coupe sans fil.

5. Système de coupe (1) selon l'une des revendications précédentes, dans lequel le transmetteur de confirmation de coupe (14) et le récepteur intermédiaire de confirmation de coupe (16) réalisent conjointement un premier raccordement sans fil d'une pluralité de raccordements sans fil qui forment conjointement un raccordement sans fil de confirmation de coupe.

6. Système de coupe (1) selon la revendication 5, dans lequel les moyens de communication de confirmation de coupe (11) comprennent un transmetteur intermédiaire de confirmation de coupe (18) raccordé au récepteur intermédiaire de confirmation de coupe (16) au niveau de la pompe électrohydraulique (3), ainsi qu'un récepteur de confirmation de coupe (15') raccordé au et logé sur le dispositif de commande à distance (8) qui réalisent conjointement un second raccordement sans fil de deux raccordements sans fil formant conjointement ledit raccordement sans fil de confirmation de coupe.

7. Système de coupe (1) selon la revendication 5, dans lequel les moyens de communication de confirmation de coupe (11) comprennent un transmetteur intermédiaire de confirmation de coupe (18) raccordé au récepteur intermédiaire de confirmation de coupe (16) au niveau de la pompe électrohydraulique (3), ainsi qu'un récepteur intermédiaire de confirmation de coupe (19) supplémentaire monté sur ou logé sur une station de réception intermédiaire (17) séparée physiquement de l'outil de coupe (2) et du dispositif de commande à distance (8) et positionnable librement dans une position intermédiaire entre ceux-ci ou une position indépendante de ceux-ci,
dans lequel le transmetteur intermédiaire de confirmation de coupe (18) et le récepteur intermédiaire de confirmation de coupe (19) réalisent conjointement un second raccordement sans fil de deux raccordements sans fil qui forment conjointement le raccordement sans fil de confirmation de coupe mentionné plus haut.

8. Système de coupe (1) selon la revendication 1, dans lequel les moyens de communication de confirmation de coupe (11) comprennent une première ligne de transmission physique (20), étendue du détecteur de coupe (9) à la pompe électrohydraulique (3) et configurée pour transmettre un signal prédéterminé ou une impulsion prédéterminée représentant la réalisation de la coupe.

9. Système de coupe (1) selon la revendication 4, dans lequel les moyens de signalisation (24) comprennent un indicateur de lumière et un indicateur acoustique agencés dans le dispositif de commande à distance (8).

10. Système de coupe (1) selon l'une des revendications précédentes, dans lequel le détecteur de coupe (9) est raccordé à la tête de travail (4) de façon à détecter l'arrivée d'une ou des deux mâchoires de coupe (5, 6) dans la position fermée ou l'arrivée du piston d'actionnement (38) dans la position de fin de course correspondant à la position fermée des mâchoires (5, 6).

11. Système de coupe (1) selon l'une des revendications précédentes, dans lequel le détecteur de coupe (9) comprend un élément mobile (40) qui est déplacé par au moins l'une des mâchoires (5, 6) ou par un piston d'actionnement (38) de la tête de travail (4) au niveau de la réalisation de la position fermée des mâchoires (5, 6) et une partie de l'énergie de mouvement de l'élément mobile (40) est utilisée pour alimenter en énergie et actionner le transmetteur de confirmation de coupe (14), le système de coupe n'ayant pas de batterie électrique pour le détecteur de coupe (9).

12. Système de coupe (1) selon la revendication 11, dans lequel une portion supplémentaire de l'énergie de déplacement de l'élément mobile (40) est accumulée pour la réception, par le transmetteur de confirmation de coupe (14), d'un signal de confirmation en provenance du récepteur de confirmation de coupe (15, 15') que le premier signal de confirmation de coupe a été reçu et, dans le cas négatif, pour répéter la transmission du signal de confirmation de coupe.
